# FASCICULE DE BREVET EUROPEEN

(11) **EP 4 311 968 B1**
(45) Date de publication et mention de la délivrance du brevet: **20.11.2024**
(21) Numéro de dépôt: 23187935.4
(22) Date de dépôt: 26.07.2023
(51) Int. Cl.: F16L 9/18, F16L 59/06, F16L 59/14, F24F 13/02, F16L 59/04

(54) **ÉLÉMENT DE CONDUIT ISOLÉ THERMIQUEMENT ET RÉSEAU DE TRANSPORT D'AIR OBTENU PAR L'ASSEMBLAGE D'UNE PLURALITÉ DE TELS ÉLÉMENTS DE CONDUIT**
THERMISCH ISOLIERTES LEITUNGSELEMENT UND DURCH DIE MONTAGE EINER VIELZAHL SOLCHER LEITUNGSELEMENTE ERHALTENES LUFTTRANSPORTNETZ
THERMALLY INSULATED DUCT ELEMENT AND AIR TRANSPORT NETWORK OBTAINED BY ASSEMBLING A PLURALITY OF SUCH DUCT ELEMENTS

(30) Priorité: 28.07.2022 FR 2207805
(43) Date de publication de la demande: 31.01.2024
(73) Titulaire: VITALOME, 79360 Granzay-Gript (FR)
(72) Inventeur: BALOGE, Jean-Charles, 79370 AIGONNAY (FR); BEDUCHAUD, Maxence, 17000 LA ROCHELLE (FR); PEIGNE, Pierre, 17139 DOMPIERRE SUR MER (FR); BROUSSIN, Jérôme, 79270 FRONTENAY ROHAN ROHAN (FR)
(74) Mandataire: Jacobacci Coralis Harle

(56) Documents cités:
- EP-A1- 3 282 164
- BE-A1- 1 026 788
- US-A- 4 502 370
- US-A- 6 113 155
- US-B1- 6 543 575

## Description

### Domaine technique de l'invention

La présente invention concerne le domaine technique des installations de gestion et de distribution d'air d'un bâtiment.

Elle concerne plus particulièrement un élément de conduit isolé thermiquement, adapté pour la réalisation d'un réseau de transport d'air dans de telles installations de gestion et de distribution d'air d'un bâtiment.

### Etat de la technique

Les installations de gestion et de distribution d'air dans les bâtiments (par exemple les installations de ventilation du type VMC à simple ou à double flux, ou encore tout autre équipement de traitement d'air, comprennent des moto-ventilateurs pour l'insufflation et/ou l'extraction d'air, pouvant être associés à un réseau de conduits ou de canalisations pour le transport de cet air. On peut utiliser des conduits flexibles ou rigides, du type à simple paroi ou avec une isolation thermique.

Cependant, on constate bien souvent des défaillances récurrentes sur la qualité des réseaux de conduits, en particulier lorsqu'il s'agit des parties réalisées en conduits flexibles, mais aussi dans tous les autres cas de figure, avec le plus souvent des défauts d'étanchéité et de continuité d'isolation.

De plus, les solutions actuelles nécessitent encore couramment le recours à des outils de découpe ou à des éléments de fixation, tels que des visseries ou des rivets, qui compliquent les opérations de montage et également la dépose, en particulier pour les opérations d'entretien.

Dans le domaine technique concerné, on connaît par les documents EP3282164, US6113155 ou encore US6543575, des éléments de conduits isolés thermiquement qui correspondent au préambule de la revendication 1.

Cependant, les performances d'isolation thermique de ces éléments de conduits ne sont pas optimales.

### Présentation de l'invention

Afin de remédier aux inconvénients précités de l'état de la technique, la présente invention propose un élément de conduit isolé thermiquement tel que défini par la

Les systèmes d'entretoises annulaires ménagés au niveau des deux extrémités de l'élément de conduit assurent le maintien concentrique, espacé, des tubes intérieur extérieur et intermédiaire(s).

Ces systèmes d'entretoises annulaires comblent l'espace annulaire entre le tube intérieur 2 et le tube extérieur 3 ; ils cloisonnent un volume annulaire d'air (ou autre isolant thermique) qui limite les pertes de calories. Ils ont de préférence une structure pleine, sans ouverture, mais ils peuvent comporter de petites ouvertures, orifices ou fentes, ou être poreux.

Par un matériau isolant thermique, on entend un matériau ayant un coefficient moyen de conduction thermique inférieur ou égal à 0,05 W/(m.K).

D'autres caractéristiques non limitatives et avantageuses de l'élément de conduit isolé thermiquement conforme à l'invention, prises individuellement ou selon toutes les combinaisons techniquement possibles, sont les suivantes :
- la bordure d'entrée dudit logement interne comprend un chanfrein adapté pour guider l'introduction de l'extrémité du tube intercalaire associé ;
- les systèmes d'entretoises annulaires sont réalisés en un matériau étanche à l'air ;
- les systèmes d'entretoises annulaires sont réalisés en un matériau compressible ;
- les systèmes d'entretoises annulaires sont réalisés en un matériau compressible choisi parmi les mousses de polyoléfine réticulée, en particulier les mousses de polypropylène expansé (PPE) ou de polyéthylène expansé (PEE), ou encore tout autre isolant réalisé en fibres compressées.
- les systèmes d'entretoises annulaires comprennent :
   a/ une face interne d'entretoise, orientée vers ledit tronçon d'espace annulaire fermé, et
   b/ une face externe d'entretoise, opposée à ladite face interne d'entretoise, orientée vers l'extérieur,
   ladite face externe d'entretoise s'étendant extérieurement par rapport aux bordures d'extrémités desdits tubes intérieur, extérieur et éventuellement intercalaire(s) ;
- au moins certaines surfaces desdits systèmes d'entretoise annulaires en contact avec les tubes intérieur, extérieur et éventuellement intercalaire(s) comprennent des structures de stries ou de protubérances adaptés pour limiter les possibilités de désolidarisation entre lesdits systèmes d'entretoise et lesdits tubes intérieur, extérieur et éventuellement intercalaire(s) ;
- au moins certaines surfaces desdits systèmes d'entretoise annulaires en contact avec les tubes intérieur, extérieur et éventuellement intercalaire(s) comprennent une rainure circulaire en saillie, ou une gorge circulaire en creux, agencée pour coopérer avec une moulure circulaire complémentaire, en creux ou en saillie, ménagée dans la surface en regard dudit ou desdits tubes intérieur, extérieur et éventuellement intercalaire(s), pour verrouiller l'assemblage des deux éléments ;
- l'épaisseur de l'espace annulaire, ou de chacun des espaces annulaires, est compris entre 5 et 25 mm, de préférence entre 10 et 20 mm.

La présente invention concerne encore un réseau de transport d'air comprenant une pluralité d'éléments de conduit isolés thermiquement tes que définis ci-dessus, et assemblés les uns aux autres par des moyens d'assemblage.

Selon une première forme de réalisation, lesdits moyens d'assemblage sont du type à emboitement mâle-femelle, lesdits éléments de conduit comprenant une première extrémité d'emboitement de type mâle et une seconde extrémité d'emboitement de type femelle.

Selon une deuxième forme de réalisation possible lesdits moyens d'assemblage sont du type à emboitement mâle-femelle, lesdits éléments de conduit comprenant deux extrémités d'emboitement de type femelle, et ledit réseau de transport d'air comprenant encore un système de raccords d'emboitement de type mâle-mâle.

Selon une autre forme de réalisation intéressante, le réseau de transport d'air comprend une pluralité d'éléments de conduit avec des faces externes d'entretoises qui s'étendent en saillie extérieurement par rapport aux bordures d'extrémités des tubes intérieur, extérieur et éventuellement intercalaire(s), tels que définis ci-dessus, et dans ce réseau de transport d'air :
- lesdits moyens d'assemblage comprennent un collier de serrage agencé pour assembler deux extrémités de deux éléments de conduit mises bout à bout,
- les faces externes d'entretoises des systèmes d'entretoises annulaires des deux éléments de conduit à assembler sont en appui l'une contre l'autre,
- les extrémités des deux éléments de conduit à assembler comprennent chacune une moulure sur leur surface extérieure,
- ledit collier de serrage comprend des rebords de verrouillage en saillie vers l'intérieur, ménagés le long de ses deux bordures latérales, et
- lesdits rebords de verrouillage dudit collier de serrage viennent coopérer avec lesdites moulures des deux éléments de conduit à assembler de sorte, lors du serrage dudit collier de serrage, à comprimer l'une contre l'autre lesdites faces externes d'entretoises, et obtenir une continuité et une étanchéité de la zone intérieure adaptée au transport d'air.

On obtient ainsi une isolation efficace sur toute la longueur du réseau, notamment à chaque jonction d'éléments de conduit.

Une telle structure permet également une maîtrise de l'étanchéité à l'air, notamment au niveau de chaque jonction ou raccord aux autres composants (caisson, bouches, répartiteur...).

Une telle structure permet encore une pose et une dépose simples et intuitive du matériel.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
La figure 1 est une vue schématique en perspective d'un premier mode de réalisation d'un élément de conduit isolé thermiquement illustré ici dissocié d'un raccord d'emboitement de type mâle-mâle permettant l'assemblage d'une pluralité d'éléments de conduit identiques ou similaires pour l'obtention d'un réseau de transport d'air ;
La figure 2 est une vue schématique en perspective d'un deuxième mode de réalisation d'un élément de conduit isolé thermiquement;
La figure 3 est une vue schématique en perspective d'un troisième mode de réalisation d'un élément de conduit isolé thermiquement, et qui illustre le principe d'assemblage d'une pluralité de tels éléments de conduit par des colliers de serrage ;
La figure 4 est une vue en perspective d'une entretoise annulaire formant embout, apte à être utilisée pour la réalisation de l'élément de conduit illustré sur la figure 3 ;
La figure 5 est une vue de côté de l'entretoise annulaire illustrée sur la figure 4 ;
La figure 6 est une vue schématique en perspective d'un quatrième mode de réalisation d'un élément de conduit isolé thermiquement selon l'invention, et qui illustre le principe d'assemblage d'une pluralité de tels éléments de conduit par des colliers de serrage ;
La figure 7 est une vue en coupe longitudinale d'un élément de conduit isolé thermiquement selon la figure 6, comprenant des entretoises annulaires selon le principe des figures 4 et 5, et illustré dissocié d'un collier de serrage pour l'assemblage d'une pluralité de tels éléments de conduit ;
La figure 8 est une vue en coupe longitudinale qui illustre deux élément de conduit selon la figure 7 assemblés par un collier de serrage ;
La figure 9 est une vue en coupe longitudinale d'une variante de réalisation de l'élément de conduit des figures 7 et 8, ici en forme de coude ;
La figure 10 est une vue en coupe longitudinale encore d'une autre variante de réalisation de l'élément de conduit des figures 7 et 8, ici en forme de Té de répartition ;
La figure 11 est une vue en coupe longitudinale d'un cinquième mode de réalisation d'un élément de conduit isolé thermiquement selon l'invention.

Il est à noter que, sur ces figures, les éléments structurels et/ou fonctionnels communs aux différentes variantes peuvent présenter les mêmes références.

De manière générale, dans la présente description, les expressions « élément de conduit » et « élément de conduit isolé thermiquement » sont synonymes et utilisés indifféremment.

Les éléments de conduit isolés thermiquement décrits ci-après sont destinés à être assemblés avec d'autres éléments de conduit identiques ou similaires pour réaliser un réseau de transport d'air, en particulier un réseau de VMC à simple ou à double flux dans une installation de gestion et de distribution d'air d'un bâtiment.

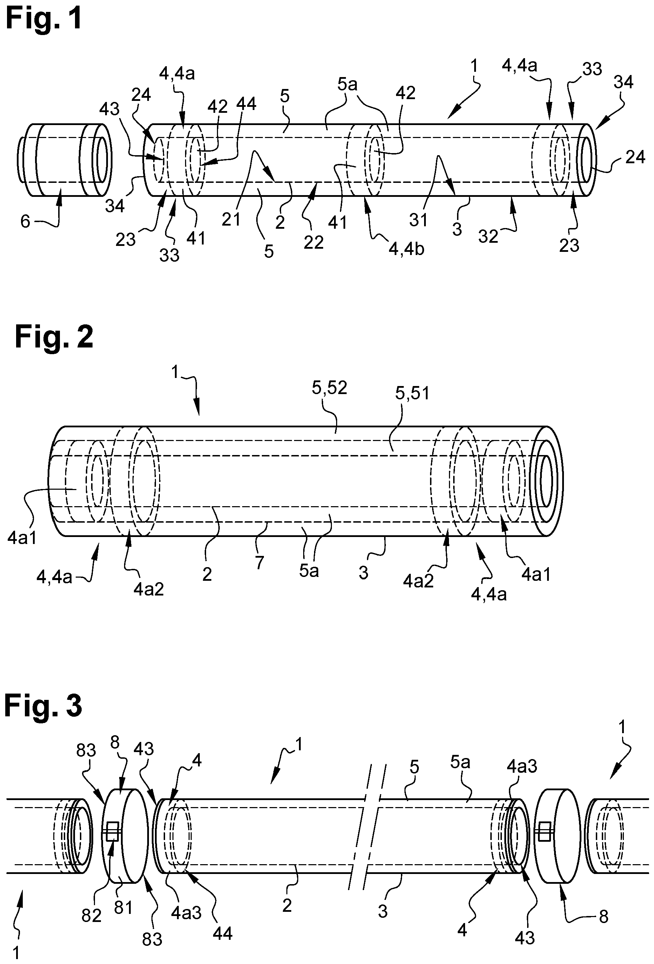

Tel que représenté sur la figure 1, l'élément de conduit 1 isolé thermiquement comprend :
- un tube intérieur 2 rigide qui comporte une surface intérieure 21, une surface extérieure 22 et deux extrémités 23 qui se terminent chacune par une bordure d'extrémité 24, et
- un tube extérieur 3 rigide qui comporte une surface intérieure 31, une surface extérieure 32 et deux extrémités 33 qui se terminent chacune par une bordure d'extrémité 34.

Les deux tubes 2 et 3 ont ici une section circulaire.

Dans des variantes de réalisation cette section peut être ovale, oblongue ou polygonale.

Les deux tubes 2 et 3 ont ici une même longueur ou pratiquement une même longueur.

Le tube extérieur 3 est concentrique au tube intérieur 2, maintenu séparé de ce dernier par des systèmes d'entretoises annulaires 4.

Au moins deux de ces systèmes d'entretoises annulaires 4 sont disposés au niveau des extrémités 23, 33 du tube intérieur 2 et du tube extérieur 3, entre leurs surfaces en regard 22 et 31.

Ces deux systèmes d'entretoises annulaires 4 d'extrémités sont repérés 4a sur la figure 1.

Un ou plusieurs systèmes d'entretoises annulaires 4 complémentaires peuvent être prévus entre les deux systèmes d'entretoises annulaires d'extrémités 4a.

Sur la figure 1 on a représenté un tel système d'entretoise annulaire complémentaire, repéré 4b, disposé dans la partie centrale de l'élément de conduit 1 isolé thermiquement.

L'âme centrale définie par la surface intérieure 21 du tube intérieur 2 est destinée au transport de l'air, et les systèmes d'entretoises annulaires 4 permettent de créer un espace annulaire 5 entre les deux tubes 2 et 3 pour obtenir une paroi tubulaire isolée thermiquement.

De préférence l'espace annulaire 5 en question a une épaisseur comprise entre 5 et 25 mm, et de manière encore préférée comprise entre 10 et 20 mm.

Les systèmes d'entretoises annulaires 4 sont réalisés dans un matériau isolant thermique et ils sont pleins, c'est-à-dire dépourvus d'ouvertures, pour définir entre eux au moins un tronçon d'espace annulaire fermé 5a.

Les tubes intérieur 2 et extérieur 3 présentent de préférence une certaine rigidité pour conserver leur forme cylindrique, ou autre, sur toute leur longueur, sans se déformer, ou sans trop se déformer, sous l'effet de contraintes extérieures.

Ces deux tubes intérieur 2 et extérieur 3 peuvent être de nature diverse en fonction des applications envisagées : métal, plastique, composite, carton, papier technique, tissu fibré, mousse rigide etc.

La longueur de l'élément de conduit 1 isolé thermiquement peut par exemple être comprise entre 1m et 2m.

Les systèmes d'entretoises annulaires 4 sont réalisés en un matériau étanche à l'air ou pratiquement étanche à l'air.

Ainsi, le matériau utilisé est de préférence étanche à l'air, mais on peut aussi envisager l'utilisation d'un matériau poreux à l'air, autorisant les échanges d'air de part et d'autre, du moment que cette porosité ne permette pas la création d'un flux d'air.

Dans le mode de réalisation illustré sur la figure 1, les systèmes d'entretoises annulaires 4 sont constitués chacun d'un unique anneau de matière de quelques centimètres de longueur et d'une épaisseur comprise entre 5 et 25 mm, et de préférence comprise entre 10 et 20 mm. Chaque anneau de matière 4 est en forme générale de portion de tube et comprend : une couronne externe 41, en appui contre la surface intérieure 31 du tube extérieur 3, une couronne interne 42, en appui contre la surface extérieure 22 du tube intérieur 2, une face externe 43, orientée vers l'extérieur, et une face interne 44, opposée, orientée vers l'intérieur.

Au moins certaines des surfaces 41, 42 des systèmes d'entretoise annulaires 4 en contact avec les tubes intérieur 2 et extérieur 3 peuvent comprendre des structures de stries ou de protubérances adaptés pour limiter les possibilités de désolidarisation entre lesdits systèmes d'entretoise 4 et lesdits tubes intérieur 2 et extérieur 3.

Les systèmes d'entretoises annulaires 4 sont avantageusement réalisés en un matériau compressible. Leur structure peut être « pleine », formée d'une juxtaposition de cellules fermées.

Par exemple ils peuvent être réalisés en un matériau choisi parmi les mousses de polyoléfine réticulée, en particulier les mousses de polypropylène expansé (PPE) ou de polyéthylène expansé (PEE), ou encore tout autre isolant réalisé en fibres compressées.

Une telle structure permet d'obtenir un élément de conduit 1 isolé thermiquement, comprenant un espace annulaire fermé emprisonnant une lame d'air immobile entre les deux tubes intérieur 2 et extérieur 3.

Dans une variante de réalisation, en fonction des besoins, des applications ou des performances thermiques recherchées, les tronçons d'espace annulaire 5 entre les deux tubes 2 et 3 peuvent être comblés par un matériau isolant thermique en vrac, en nappe ou en coquille, avec une très large liberté de choix dans la nature de ce matériau isolant (minérale, végétale, synthétique, matière recyclée...).

Les systèmes d'entretoises annulaires d'extrémités 4a sont disposées au niveau des extrémités 23, 33 des deux tubes intérieur 2 et extérieur 3, ici chacun à quelques centimètres des bordures d'extrémité 24, 34 des deux tubes intérieur 2 et extérieur 3.

Dans une variante de réalisation, les faces externes 43 des deux systèmes d'entretoises annulaires d'extrémités 4a peuvent venir affleurer les bordures d'extrémité 24, 34 de l'élément de conduit 1.

De préférence les systèmes d'entretoises annulaires 4 sont introduits à force entre les deux tubes 2 et 3 et on peut alors obtenir un assemblage sans autre moyen de solidarisation, en particulier sans colle et sans soudure.

Un tel assemblage est optimisé par l'utilisation d'un matériau compressible pour la réalisation des systèmes d'entretoises annulaires 4. Il permet également de faciliter les opérations d'assemblage de l'élément de conduit, ainsi que son démontage et sa recyclabilité en fin de vie.

Les systèmes d'entretoises annulaires 4 ménagés au niveau des deux extrémités de l'élément de conduit 1 assurent le maintien concentrique, espacé, des deux tubes intérieur 2 et extérieur 3.

Ces systèmes d'entretoises annulaires 4 comblent l'espace annulaire entre le tube intérieur 2 et le tube extérieur 3 ; ils cloisonnent un volume annulaire d'air (ou autre isolant thermique) qui limite les pertes de calories. Ils ont de préférence une structure pleine, sans ouvertures, mais ils peuvent comporter de petites ouvertures, orifices ou fentes, ou, comme précisé ci-dessus, être poreux.

Par un matériau isolant thermique, on entend généralement un matériau ayant un coefficient moyen de conduction thermique inférieur ou égal à 0,05 W/(m.K)

Les éléments de conduit 1 isolés thermiquement sont raboutés et assemblés deux à deux par tout moyen d'assemblage approprié pour obtenir le réseau de transport d'air recherché.

Par exemple, tel qu'illustré sur la figure 1, ces moyens d'assemblage sont du type à emboitement mâle-femelle ; et on utilise des raccords d'emboitement 6 de type mâle-mâle, qui coopèrent avec des éléments de conduit 1 comprenant deux extrémités d'emboitement de type femelle.

Le raccord d'emboitement 6 comprend deux tronçons de tube concentriques, l'un intérieur et l'autre extérieur, qui sont séparés par un système d'entretoise identiques aux systèmes d'entretoises annulaires 4 décrits ci-dessus, ou différents ; et ces deux tubes comprennent chacun deux extrémités mâles adaptées pour coopérer avec deux extrémités femelles en regard d'un élément de conduit 1.

Selon une autre possibilité (non représentée), les éléments de conduit 1 comprennent chacun une première extrémité d'emboitement de type mâle et une seconde extrémité d'emboitement de type femelle ; et deux éléments de conduit 1 sont directement assemblés l'un avec l'autre par emboitements de type mâle-femelle.

Dans le cas de tels emboitements mâle/femelle, certains au moins des éléments tubulaires à assembler peuvent comprendre des moulures circulaires complémentaires de verrouillage et/ou des joints circulaires d'étanchéité.

Encore selon une variante de réalisation, détaillée plus loin dans la description, les extrémités en regard de deux éléments de conduit 1 peuvent être juxtaposées et assemblées entre elles au moyen de colliers de serrage.

Dans le but d'améliorer les caractéristiques d'isolation thermique, l'élément de conduit 1 isolé thermiquement peut comprendre un ou plusieurs tubes intercalaires disposé(s) de manière concentrique entre le tube intérieur 2 et ledit tube extérieur 3, séparé de ces derniers par des systèmes d'entretoise annulaires, pour créer une pluralité d'espaces annulaires superposés entre ledit tube intérieur 2 et ledit tube extérieur 3.

Une telle structure est illustrée sur la figure 2, dans laquelle on retrouve un élément de conduit 1 qui comprend un tube intérieur 2 (pour la conduction de l'air) et un tube extérieur 3, séparés par des systèmes d'entretoises annulaires 4a d'extrémités.

Ici, un tube intercalaire 7 est interposé entre le tube intérieur 2 et le tube extérieur 3 pour créer deux espaces annulaires 5 superposés, l'un intérieur 51 et l'autre extérieur 52.

Le tube intercalaire 7 peut avoir une longueur identique ou pratiquement identique à celles des tubes intérieur 2 et extérieur 3.

Tout comme le tube intérieur 2 et le tube extérieur 3, ce tube intercalaire 7 peut être réalisé en un matériau métallique, plastique, composite, en carton, en papier technique, tissu fibré, mousse rigide, etc.

Chaque système d'entretoise annulaire 4a qui est disposé au niveau d'une extrémité des tubes intérieur 2, extérieur 3 et intercalaire 7 est constitué de deux structures d'entretoises 4a1, 4a2, chacune en forme de tronçon de tube indépendant séparant chaque couple de tubes, d'une part le tube intérieur 2 et le tube intercalaire 7, et d'autre part le tube intercalaire 7 et le tube extérieur 3.

Au niveau de chaque extrémité de l'élément de conduit 1, les deux structures d'entretoises 4a1, 4a2 peuvent être disposées dans le même plan, ou être décalées l'une de l'autre. Elles peuvent être disposées en retrait des bordures d'extrémité des tubes ou en affleurement de ces dernières.

Les deux structures d'entretoises 4a1, 4a2 ont des formes générales et des structures identiques ou similaires à celles des systèmes d'entretoises annulaires 4 décrits ci-dessus en relation avec la figure 1.

Ainsi, chaque structure d'entretoise 4a1, 4a2 se présente sous la forme d'un anneau de matière de quelques centimètres de longueur et d'une épaisseur comprise entre 5 et 25 mm, et de préférence comprise entre 10 et 20 mm.

Au moins certaines de leurs surfaces en contact avec les tubes intérieur 2, extérieur 3 et intermédiaire 7 peuvent comprendre des structures de stries ou de protubérances adaptés pour limiter les possibilités de désolidarisation avec ces différents tubes.

Ces structures d'entretoises 4a1, 4a2 sont avantageusement réalisées en un matériau compressible. Par exemple ils peuvent être réalisés en un matériau choisi parmi les mousses de polyoléfine réticulée, en particulier les mousses de polypropylène expansé (PPE) ou de polyéthylène expansé (PEE), ou encore tout autre isolant réalisé en fibres compressées.

Une telle structure permet d'obtenir un élément de conduit 1 isolé thermiquement, comprenant deux espaces annulaires 5 superposés et fermés, emprisonnant une lame d'air immobile.

Là encore, dans une variante de réalisation, en fonction des besoins, des applications ou des performances thermiques recherchées, les tronçons d'espace annulaire 5 entre les deux tubes 2-7, d'une part, et 7-3, d'autre part, peuvent être comblés par un matériau isolant thermique en vrac, en nappe ou en coquille, avec une très large liberté de choix dans la nature de ce matériau isolant (minérale, végétale, synthétique, matière recyclée...).

De préférence les deux structures d'entretoises 4a1, 4a2 sont introduits à force entre les deux tubes 2-7 et 7-3 et on peut alors obtenir un assemblage sans autre moyen de solidarisation, en particulier sans colle et sans soudure.

Un tel assemblage est optimisé par l'utilisation d'un matériau compressible pour la réalisation des structures d'entretoises 4a1, 4a2. Il permet également de faciliter les opérations d'assemblage de l'élément de conduit, ainsi que son démontage et sa recyclabilité en fin de vie.

De tels éléments de conduit 1 isolés thermiquement, selon la figure 2, sont raboutés et assemblés deux à deux par tout moyen d'assemblage approprié pour obtenir le réseau de transport d'air recherché.

Comme pour le mode de réalisation précédent illustré sur la figure 1, ces moyens d'assemblage peuvent utiliser des raccords d'emboitement de type mâle-mâle, qui coopèrent avec des éléments de conduit 1 comprenant deux extrémités d'emboitement de type femelle.

Selon une autre possibilité, non représentée, les éléments de conduit 1 comprennent chacun une première extrémité d'emboitement de type mâle et une seconde extrémité d'emboitement de type femelle ; et deux éléments de conduit 1 sont directement assemblés l'un avec l'autre par emboitements de type mâle-femelle.

Encore selon une variante de réalisation, détaillée plus loin dans la description, les extrémités en regard de deux éléments de conduit 1 peuvent être juxtaposées et assemblées entre elles au moyen de colliers de serrage.

La figure 3 illustre une variante de réalisation d'un élément de conduit 1 qui comprend un tube intérieur 2 et un tube extérieur 3, concentriques, espacés l'un de l'autre pour créer un espace annulaire 5 au moyen de systèmes d'entretoises annulaires en forme d'embout-entretoises d'extrémités 4a3.

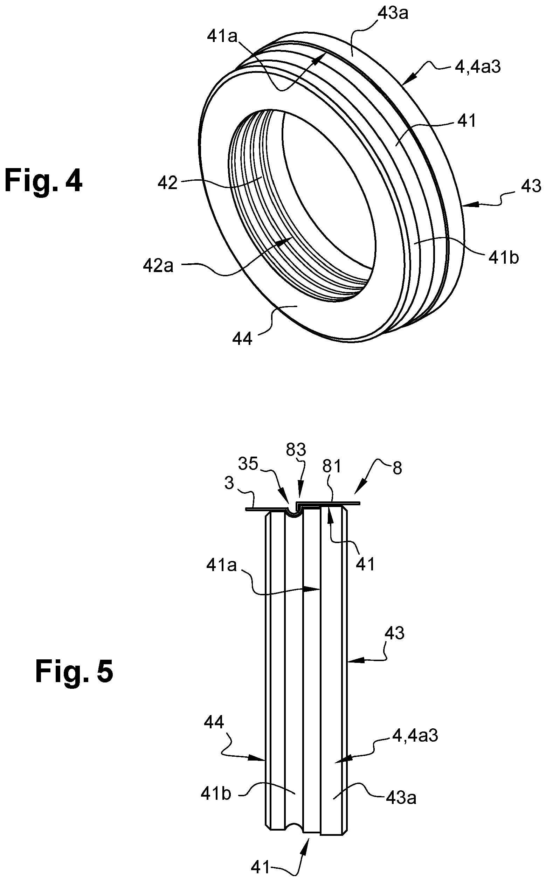

Les embout-entretoises d'extrémités 4a3, dont l'un est représenté isolément sur les figures 4 et 5, se présentent sous la forme générale d'un anneau de matière, ou d'une portion de tube, de quelques centimètres de longueur et d'une épaisseur comprise entre 5 et 25 mm, et de préférence comprise entre 10 et 20 mm.

Chaque anneau de matière 4a3 comprend : une couronne externe 41, destinée à venir en appui contre la surface intérieure 31 du tube extérieur 3, une couronne interne 42, destinée à venir en appui contre la surface extérieure 22 du tube intérieur 2, une face externe 43, orientée vers l'extérieur, et une face interne 44, opposée, orientée vers l'intérieur.

Au moins certaines des surfaces 41, 42 des anneaux de matière 4a3 en contact avec les tubes intérieur 2 et extérieur 3 peuvent comprendre des structures de stries ou de protubérances adaptés pour limiter les possibilités de désolidarisation entre lesdits systèmes d'entretoise 4 et lesdits tubes intérieur 2 et extérieur 3.

Les embout-entretoises d'extrémités 4a3 sont réalisés en un matériau compressible, isolant thermique et étanche, ou pratiquement étanche à l'air, par exemple en polypropylène expansé (PPE).

Les deux embout-entretoises d'extrémités 4a3 sont introduits à force entre les deux tubes 2 et 3 et on obtient un assemblage sans autre moyen de solidarisation, en particulier sans colle ni soudure.

Dans ce mode de réalisation de la figure 3, les deux embout-entretoises d'extrémités 4a3 ne sont pas complètement introduits entre les deux tubes 2 et 3, et leur face externe 43 s'étend extérieurement par rapport aux bordures d'extrémités 24, 34 des deux tubes intérieur 2 et extérieur 3. De ce fait, une partie externe 43a des embout-entretoises d'extrémités 4a3 s'étend en saillie par rapport aux bordures d'extrémités 24, 34 des deux tubes intérieur 2 et extérieur 3 ; et cette partie externe 43a en saillie est compressible du fait du matériau constitutif utilisé.

Lors de ce montage des embout-entretoises d'extrémités 4a3, une partie de leur couronne externe 41, vient en contact avec la surface intérieure 31 du tube extérieur 3, et une partie de leur couronne interne 42, vient en contact avec la surface extérieure 22 du tube intérieur 2.

Sur les figures 4 et 5 on remarque la présence :
- d'un léger rétreint sur la couronne externe 41 des embout-entretoises d'extrémités 4a3, pour l'accueil du tube extérieur 3, et qui forme un épaulement 41a contre lequel la bordure d'extrémité 34 du tube extérieur 3 est destinée à venir en appui, et
- d'un léger rétreint sur la couronne interne 42 des embout-entretoises d'extrémités 4a3 pour l'accueil du tube intérieur 2, et qui forme un épaulement 42a contre lequel la bordure d'extrémité 24 du tube intérieur 2 est destinée à venir en appui.

Avec la face externe 43, ces deux épaulements 41a et 42a délimitent la partie externe 43a compressible des embout-entretoises d'extrémités 4a3.

Toujours sur les figures 4 et 5 on remarque que la partie de la couronne externe 41 des embout-entretoises d'extrémités 4a3 qui vient en contact avec la surface intérieur 31 du tube extérieur 3 comprend une rainure circulaire 41b en saillie, agencée pour coopérer avec une moulure circulaire 35 complémentaire, ménagée dans la surface en regard du tube extérieur 3, pour verrouiller l'assemblage des deux éléments.

Ce verrouillage est adapté pour être réalisé lorsque la bordure d'extrémité 34 du tube extérieur 3 vient en butée contre l'épaulement 41a des embout-entretoises d'extrémités 4a3. Un tel verrouillage est facilité du fait des caractéristiques de compressibilité du matériau constitutif des embout-entretoises d'extrémités 4a3.

A la place d'une gorge en creux 41b, on peut envisager une nervure en saillie coopérant avec une forme complémentaire ménagée en creux dans la surface intérieure 31 du tube extérieur 3.

Un même type de verrouillage, ou un verrouillage similaire, peut être prévu entre les embout-entretoises d'extrémités 4a3 et le tube intérieur 2 et/ou un éventuel tube intercalaire.

L'assemblage d'une pluralité d'éléments de conduit 1 tels que représentés sur la figure 3 peut être réalisé au moyen de colliers de serrage 8, tel qu'illustré sur les figures 3 et 5.

Les colliers de serrage 8 sont agencés pour assembler deux extrémités de deux éléments de conduit 1 mises bout à bout, avec les faces externes 43 de leurs systèmes d'entretoises annulaires 4a3 en appui l'une contre l'autre.

Ces colliers de serrage 8 comprennent une bande circulaire 81, par exemple en forme de feuillard métallique, munie d'une boucle de serrage 82, et dont les deux bordures latérales comprennent des rebords de verrouillage 83 en saillie vers l'intérieur (figure 5).

Les extrémités des deux éléments de conduit 1 à assembler comprennent chacune une moulure sur la surface extérieure 32 du tube extérieur 3. De préférence cette moulure est une moulure en creux qui correspond à la moulure de verrouillage 35 mentionnée ci-dessus. Et une fois les deux éléments de conduit 1 raboutés, la distance qui sépare leur deux moulures 35 en vis-à-vis correspond approximativement à la largeur du collier de serrage 8, et donc à la distance qui sépare ses rebords de verrouillage 83.

La pose du collier de serrage 8 sur la jonction des deux éléments de conduit 1 permet l'insertion de ses rebords de verrouillage 83 dans les moulures en creux 35 des deux éléments de conduit 1 à assembler, et ces rebords de verrouillage 83 du collier de serrage 8 viennent coopérer avec lesdites moulures 35 de sorte, lors du serrage dudit collier de serrage 8 au moyen de sa boucle de serrage 82, à comprimer l'une contre l'autre lesdites faces externes 43 d'entretoises.

La forme des moulures 35 est adaptée pour obtenir une telle compression des parties externes 43a des embout-entretoises d'extrémités 4a3 lors du serrage du collier de serrage 8.

On obtient alors une continuité et une étanchéité de la zone intérieure adaptée au transport d'air et correctement isolée.

Les éléments de conduits des figures 1 à 5 n'entrent pas dans le champ de protection des revendications.

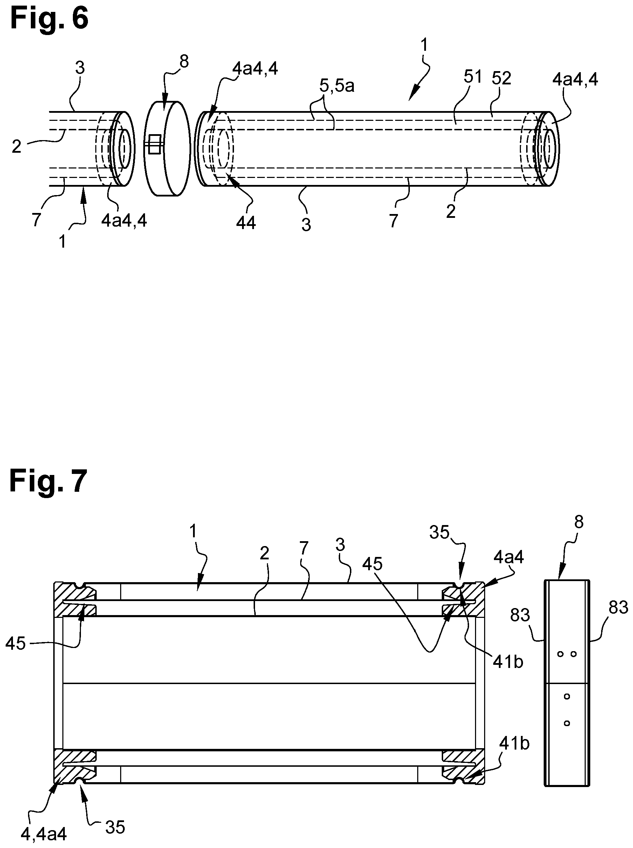

La figure 6 illustre de manière schématique une variante de réalisation de l'élément de conduit 1 de la figure 3, qui comprend en plus un tube intercalaire 7 interposé entre le tube intérieur 2 et le tube extérieur 3 pour créer deux espaces annulaires 5 superposés, l'un intérieur 51 et l'autre extérieur 52.

Les embout-entretoises d'extrémités 4a4 sont similaires aux embout-entretoises d'extrémités 4a3 illustrés sur la figure 3, mais ils comprennent en plus un logement interne, non représenté, ménagé dans leur face interne 44, pour l'accueil de l'une des extrémités du tube intercalaire 7.

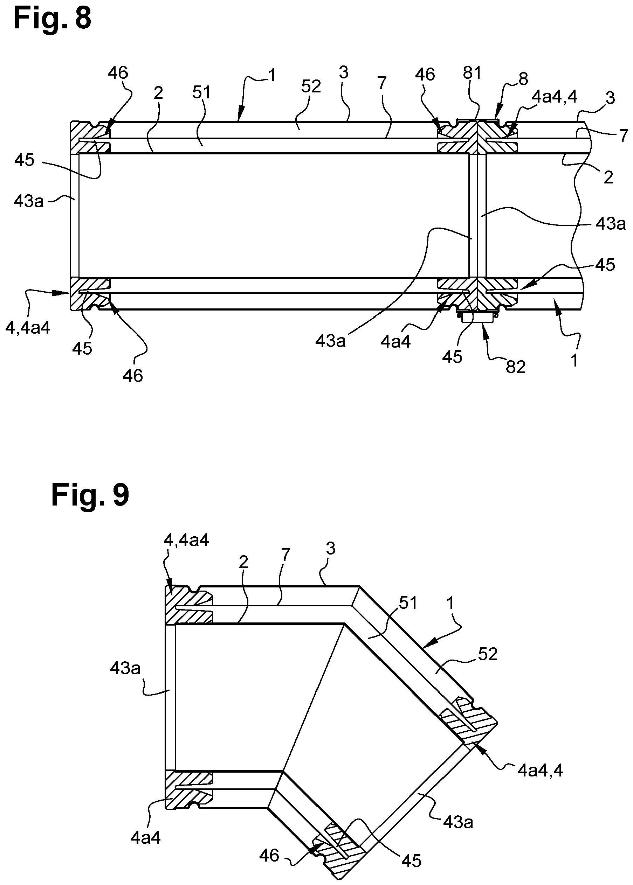

Une forme de réalisation possible de l'élément de conduit 1 selon le principe de la figure 6 est illustré sur la figure 7, dissocié d'un collier de serrage 8. Et la figure 8 illustre deux éléments de conduit 1 selon la figure 7, raboutés et assemblés par un collier de serrage 8.

Sur ces deux figures 7 et 8 on remarque le logement interne 45 ménagé dans la face interne 44 des embout-entretoises d'extrémités 4a4, pour l'accueil de l'une des extrémités du tube intercalaire 7. On remarque également que la bordure d'entrée du logement interne 45.

On a représenté sur la figure 9 une variante de réalisation de l'élément de conduit 1 des figures 7 et 8, ici en forme de coude, comprenant un tube intercalaire 7 interposé entre le tube intérieur 2 et le tube extérieur 3 pour créer deux espaces annulaires 5 superposés, l'un intérieur 51 et l'autre extérieur 52.

Les trois tubes concentriques 2, 3 et 7 sont assemblées par deux embout-entretoises d'extrémités 4a4.

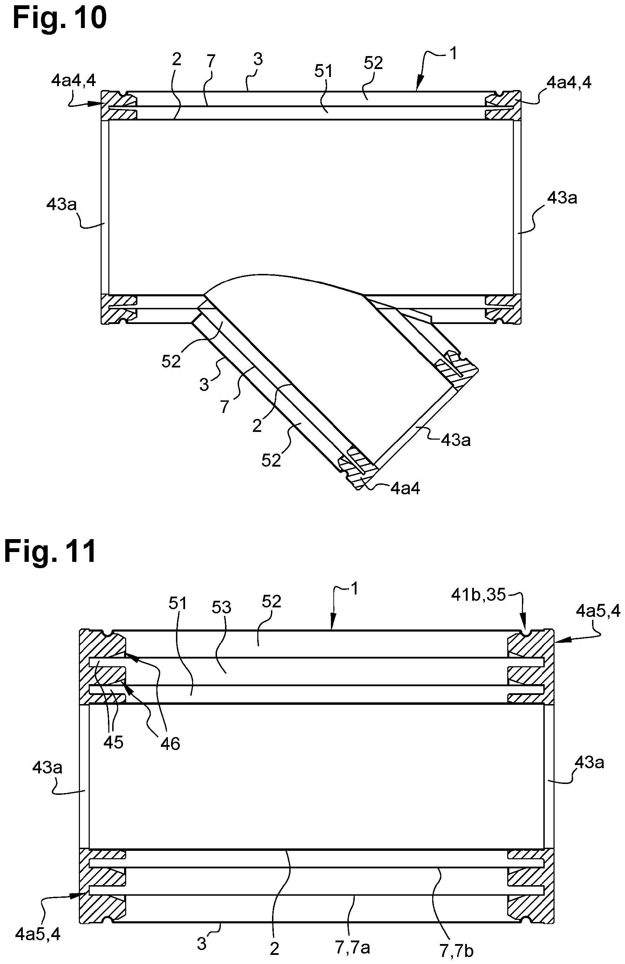

La figure 10 illustre encore d'une autre variante de réalisation de l'élément de conduit des figures 7 à 9, en forme générale de Té, avec un tronçon principal d'élément de conduit, ici horizontal, associé à un tronçon secondaire d'élément de conduit, ici incliné à 45°.

Dans des variantes de réalisation, encore pour améliorer les caractéristiques d'isolation, plusieurs tubes intercalaires 7 peuvent être interposés entre le tube intérieur 2 et le tube extérieur 3.

Par exemple, la figure 11 illustre une forme de réalisation dans laquelle l'élément de conduit 1 comprend deux tubes intercalaires 7 (repérés 7a et 7b) disposés de manière concentrique entre le tube intérieur 2 et le tube extérieur 3. Les quatre tubes 2, 3, 7a et 7b sont assemblés par deux embouts-entretoise d'extrémités 4a5.

Ces deux embout-entretoises d'extrémités 4a5 sont similaires aux embout-entretoises d'extrémités 4a3 et 4a4 décrits ci-dessus, mais ils comprennent ici deux logements internes 45 pour l'accueil des extrémités des deux tubes intercalaires 7a et 7b.

L'élément de conduit 1 correspondant comprend alors trois espaces annulaires 5 superposés, l'un intérieur 51, un autre extérieur 52 et un intermédiaire 53.

Encore dans une variante de réalisation, les faces externes 43 des embout-entretoises d'extrémités 4a3, 4a4, 4a5 peuvent comporter des structures d'emboitement complémentaires adaptées pour permettre un assemblage temporaire entre deux éléments de conduit 1 raboutés, dans l'attente de la pose d'un collier de serrage.

Les caractéristiques structurelles de l'élément de conduit 1 selon l'invention permettent au réseau de transport d'air obtenu d'être à la fois performant en isolation et en étanchéité, avec de faibles pertes de charge. Elles permettent également un assemblage rapide et d'offrir une garantie de résultat à l'installation.

D'autres avantages peuvent également être notés tels que la robustesse, la légèreté, la simplicité de fabrication, la variété des choix possibles pour l'isolant à placer dans les espaces annulaires, idéalement de l'air, ainsi que le caractère jusqu'à 100% recyclable du produit.

## Revendications

1. Elément de conduit (1) isolé thermiquement, adapté pour le transport d'air, en particulier pour la réalisation d'un réseau de transport d'air dans une installation de gestion et de distribution d'air d'un bâtiment,
lequel élément de conduit (1) isolé thermiquement comprend :
- un tube intérieur (2) rigide qui comporte une surface intérieure (21), une surface extérieure (22) et deux extrémités (23) qui se terminent chacune par une bordure d'extrémité (24),
- un tube extérieur (3) rigide qui comporte une surface intérieure (31), une surface extérieure (32) et deux extrémités (33) qui se terminent chacune par une bordure d'extrémité (34),
lequel tube extérieur (3) est concentrique audit tube intérieur (2), maintenu séparé de ce dernier par au moins deux systèmes d'entretoises annulaires (4) qui sont disposés au niveau des extrémités (23, 33) dudit tube intérieur (2) et dudit tube extérieur (3), entre les surfaces en regard (22, 31) dudit tube intérieur (2) et dudit tube extérieur (3),
lesquels systèmes d'entretoises annulaires (4) sont réalisés dans un matériau isolant thermique et définissent entre eux au moins un tronçon d'espace annulaire (5, 5a) apte à contenir de l'air ou un matériau isolant thermique rapporté,
**caractérisé en ce qu'**il comprend au moins un tube intercalaire (7, 7a ;7b) disposé de manière concentrique entre ledit tube intérieur (2) et ledit tube extérieur (3), séparé de ces derniers par lesdits deux systèmes d'entretoise annulaires (4) qui sont disposées au niveau des extrémités desdits tubes intérieur (2), extérieur (3) et intercalaire(s) (7 ; 7a, 7b), pour créer une pluralité d'espaces annulaires (5, 51, 52, 53) superposés entre ledit tube intérieur (2) et ledit tube extérieur (3),
chaque système d'entretoise annulaire (4a) qui est disposé au niveau d'une extrémité (23, 33) desdits tubes intérieur (2), extérieur (3) et intercalaire(s) (7) étant constitué d'un embout d'un seul tenant (4a3, 4a4, 4a5) :
- dont une surface intérieure tubulaire (42) est en contact avec la surface extérieure (22) du tube intérieur (2),
- dont une surface périphérique tubulaire (41) est en contact avec la surface intérieure (31) du tube extérieur (3), et
- qui comprend un logement interne (45) pour la réception d'une extrémité de chaque tube intercalaire (7).

2. Elément de conduit (1) selon la revendication 1, **caractérisé en ce que** la bordure d'entrée dudit logement interne (45) comprend un chanfrein (46) adapté pour guider l'introduction de l'extrémité du tube intercalaire (7) associé.

3. Elément de conduit (1) selon l'une quelconque des revendications 1 ou 2, **caractérisé en ce que** les systèmes d'entretoises annulaires (4) sont réalisés en un matériau étanche à l'air.

4. Elément de conduit (1) selon l'une quelconque des revendications 1 à 3, **caractérisé en ce que** les systèmes d'entretoises annulaires (4) sont réalisés en un matériau compressible.

5. Elément de conduit (1) selon la revendication 4, **caractérisé en ce que** les systèmes d'entretoises annulaires (4) sont réalisés en un matériau choisi parmi les mousses de polyoléfine réticulée, en particulier les mousses de polypropylène expansé (PPE) ou de polyéthylène expansé (PEE), ou encore tout autre isolant réalisé en fibres compressées.

6. Elément de conduit (1) selon l'une quelconque des revendication 4 ou 5, **caractérisé en ce que** les systèmes d'entretoises annulaires (4) comprennent :
- une face interne (44) d'entretoise, orientée vers ledit tronçon (5a) d'espace annulaire fermé, et
- une face externe d'entretoise (43), opposée à ladite face interne d'entretoise (44), orientée vers l'extérieur,
ladite face externe (43) d'entretoise s'étendant extérieurement par rapport aux bordures d'extrémités (24, 34) desdits tubes intérieur (2), extérieur (3) et éventuellement intercalaire(s) (7).

7. Elément de conduit (1) selon l'une quelconque des revendications 1 à 6, **caractérisé en ce que** l'épaisseur dudit espace annulaire (5), ou de chacun desdits espaces annulaires (5, 51, 52, 53), est compris entre 5 et 25 mm, de préférence entre 10 et 20 mm.

8. Réseau de transport d'air, **caractérisé en ce qu'**il comprend une pluralité d'éléments de conduit (1) selon l'une quelconque des revendications 1 à 7, assemblés les uns aux autres par des moyens d'assemblage.

9. Réseau de transport d'air selon la revendication 8, comprenant une pluralité d'éléments de conduit (1) selon la revendication 6, **caractérisé en ce que** :
- lesdits moyens d'assemblage comprennent un collier de serrage (8) agencé pour assembler deux extrémités de deux éléments de conduit (1) mises bout à bout,
- les faces externes (43) d'entretoises des systèmes d'entretoises annulaires (4a3, 4a4, 4a5) des deux éléments de conduit (1) à assembler sont en appui l'une contre l'autre,
- les extrémités des deux éléments de conduit (1) à assembler comprennent chacune une moulure (35) sur leur surface extérieure (32),
- ledit collier de serrage (8) comprend des rebords de verrouillage (83) en saillie vers l'intérieur, ménagés le long de ses deux bordures latérales, et
- lesdits rebords de verrouillage (83) dudit collier de serrage (8) viennent coopérer avec lesdites moulures (35) des deux éléments de conduit (1) à assembler de sorte, lors du serrage dudit collier de serrage (8), à comprimer l'une contre l'autre lesdites faces externes (43) d'entretoises, et obtenir une continuité et une étanchéité de la zone intérieure adaptée au transport d'air.

## Patentansprüche

1. Thermisch isoliertes Leitungselement (1), das für den Transport von Luft, insbesondere für den Aufbau eines Lufttransportnetzes in einer Steuerungs- und Verteileranlage von Luft in einem Bauwerk ausgelegt ist,
wobei das thermisch isolierte Leitungselement (1)
- ein steifes inneres Rohr (2), das eine innere Oberfläche (21), eine äußere Oberfläche (22) und zwei Enden (23), von denen jedes mit einem Endrand (24) endet,
- ein steifes äußeres Rohr (3), das eine innere Oberfläche (31), eine äußere Oberfläche (32) und zwei Enden (33), von denen jedes mit einem Endrand (34) endet,
aufweist,
wobei das äußere Rohr (3) zum inneren Rohr (2) konzentrisch ist, von letzterem durch mindestens zwei ringförmige Abstandhaltersysteme (4) getrennt gehalten wird, die im Bereich der Enden (23, 33) des inneren Rohrs (2) und des äußeren Rohrs (3) zwischen den einander gegenüberliegenden Oberflächen (22, 31) des inneren Rohrs (2) und des äußeren Rohrs (3) angeordnet sind,
wobei die Abstandhaltersysteme (4) aus einem thermisch isolierenden Material gefertigt sind und zwischen sich mindestens einen ringförmigen Raumabschnitt (5, 5a) definieren, der geeignet ist, Luft oder ein hinzugefügtes thermisch isolierendes Material zu enthalten,
**dadurch gekennzeichnet, daß** es mindestens ein Zwischenrohr (7, 7a; 7b) aufweist, das konzentrisch zwischen dem inneren Rohr (2) und dem äußeren Rohr (3) angeordnet ist, von letzteren durch die besagten beiden ringförmigen Abstandhaltersysteme (4) getrennt ist, die im Bereich der Enden des inneren Rohrs (2), des äußeren Rohrs (3) und des Zwischenrohrs (7, 7a; 7b) angeordnet sind, um zwischen dem inneren Rohr (2) und dem äußeren Rohr (3) eine Anzahl übereinanderliegender ringförmiger Räume (5, 51, 52, 53) zu schaffen,
wobei jedes ringförmige Abstandhaltersystem (4a), das im Bereich eines Endes (23, 33) des inneren Rohrs (2), des äußeren Rohrs (3) und des Zwischenrohrs (7, 7a; 7b) angeordnet ist, aus einem einstückigen Endstück (4a3, 4a4, 4a5) besteht,
- von dem eine rohrförmige innere Oberfläche (42) mit der äußeren Oberfläche (22) des inneren Rohrs (2) in Kontakt ist,
- von dem eine rohrförmige umlaufende Oberfläche (41) mit der inneren Oberfläche (31) des äußeren Rohrs (3) in Kontakt ist, und
- das einen inneren Raum (45) für die Aufnahme eines Endes jedes Zwischenrohrs (7) aufweist.

2. Leitungselement (1) gemäß Anspruch 1, **dadurch gekennzeichnet, daß** der Eingangsrand des inneren Raums (45) eine Fase (46) aufweist, die dazu ausgelegt ist, das Einführen des zugehörigen Zwischenrohrs (7) zu leiten.

3. Leitungselement (1) gemäß einem der Ansprüche 1 oder 2, **dadurch gekennzeichnet, daß** die ringförmigen Abstandhaltersysteme (4) aus einem luftdichten Material gefertigt sind.

4. Leitungselement (1) gemäß einem der Ansprüche 1 bis 3, **dadurch gekennzeichnet, daß** die ringförmigen Abstandhaltersysteme (4) aus einem kompressiblen Material gefertigt sind.

5. Leitungselement (1) gemäß Anspruch 4, **dadurch gekennzeichnet, daß** die ringförmigen Abstandhaltersysteme (4) aus einem Material gefertigt sind, das aus vernetzten Polyolefinschaumstoffen, insbesondere aus expandierten Polypropylenschaumstoffen (PPE) oder expandierten Polyethylenschaumstoffen (PEE), oder auch aus jeglichem anderen, aus komprimierten Fasern gefertigten Isoliermaterial gefertigt sind.

6. Leitungselement (1) gemäß einem der Ansprüche 4 oder 5, **dadurch gekennzeichnet, daß** die ringförmigen Abstandhaltersysteme (4)
- eine innere Abstandhalterseite (44), die zum geschlossenen ringförmigen Raumabschnitt (5a) gerichtet ist, und
- eine von der inneren Abstandhalterseite (44) abgewandte, nach außen gerichtete äußere Abstandhalterseite (43)
aufweist,
wobei sich die äußere Abstandhalterseite (43) außerhalb der Endränder (24, 34) des inneren Rohrs (2), des äußeren Rohrs (3) und des (bzw. der) eventuellen Zwischenrohrs (bzw. -rohre) (7) erstreckt.

7. Leitungselement (1) gemäß einem der Ansprüche 1 bis 6, **dadurch gekennzeichnet, daß** die Dicke des ringförmigen Raums (5) oder jedes der ringförmigen Räume (5, 51, 52, 53) zwischen 5 und 25 mm, vorzugsweise zwischen 10 und 20 mm beträgt.

8. Lufttransportnetz **dadurch gekennzeichnet, daß** es eine Anzahl Leitungselemente (1) gemäß einem der Ansprüche 1 bis 7 aufweist, die durch Montagemittel miteinander verbunden sind.

9. Lufttransportnetz gemäß Anspruch 8 mit einer Anzahl Leitungselemente (1) gemäß Anspruch 6, **dadurch gekennzeichnet, daß**
- die Montagemittel eine Rohrschelle (8) aufweisen, die zum Verbinden zweier aneinander gefügter Enden zweier Leitungselemente (1) ausgelegt ist,
- die äußeren Seiten (43) von Abstandhaltern der ringförmigen Abstandhaltersysteme (4a3, 4a4, 4a5) der beiden zusammenzufügenden Leitungselemente (1) aneinander angedrückt sind,
- die Enden der beiden zusammenzufügenden Leitungselemente (1) auf deren äußerer Oberfläche (32) einen Wulst (35) aufweisen,
- der Klemmring (8) nach innen hervorstehende Verriegelungsränder (83) aufweist, die entlang seiner beiden länglichen Ränder angeordnet sind, und
- die Verriegelungsränder (83) der Klemmringe (8) mit den Wülsten (35) der beiden zusammenzufügenden Leitungselemente (1) zusammenwirken, so daß die beiden äußeren Abstandhalterseiten (43) beim Zusammenziehen des Klemmrings (8) zusammengepreßt werden und eine Durchgängigkeit und eine Dichtigkeit des inneren, für den Transport von Luft ausgelegten Bereichs erhalten wird.

## Claims

1. A thermally insulated duct element (1), for transporting air, in particular for making an air transport network in a building air management and distribution system,
said thermally insulated duct element (1) comprising:
- a rigid inner tube (2) that includes an inner surface (21), an outer surface (22) and two ends (23) that are each ended by an end edge (24),
- a rigid outer tube (3) that includes an inner surface (31), an outer surface (32) and two ends (33) that are each ended by an end edge (34),
said outer tube (3) being concentric to said inner tube (2), held separate from the latter by at least two annular spacer systems (4) that are arranged at the ends (23, 33) of said inner tube (2) and said outer tube (3), between the opposite surfaces (22, 31) of said inner tube (2) and said outer tube (3),
said annular spacer systems (4) being made of a thermally insulating material and defining between each other at least one section of annular space (5, 5a) suitable for containing air or an insert of thermally insulating material,
**characterized in that** it comprises at least one insert tube (7; 7a, 7b) arranged concentrically between said inner tube (2) and said outer tube (3), separated from these latter by said two annular spacer systems (4) that are arranged at the ends of said inner (2), outer (3) and insert (7; 7a, 7b) tubes, to create a plurality of annular spaces (5, 51, 52, 53) superimposed between said inner tube (2) and said outer tube (3),
each annular spacer system (4a) that is arranged at one end (23, 33) of said inner (2), outer (3) and insert (7) tubes being consisted of a single-piece tip (4a3, 4a4, 4a5):
- a tubular inner surface (42) of which is in contact with the outer surface (22) of the inner tube (2),
- a tubular peripheral surface (41) of which is in contact with the inner surface (31) of the outer tube (3), and
- that comprises an internal housing (45) for receiving one end of each insert tube (7).

2. The duct element (1) according to claim 1, **characterized in that** the inlet edge of said internal housing (45) comprises a chamfer (46) adapted to guide the introduction of the end of the associated insert tube (7).

3. The duct element (1) according to any one of claims 1 or 2, **characterized in that** the annular spacer systems (4) are made of an air-tight material.

4. The duct element (1) according to any one of claims 1 to 3, **characterized in that** the annular spacer systems (4) are made of a compressible material.

5. The duct element (1) according to claim 4, **characterized in that** the annular spacer systems (4) are made of a material selected from cross-linked polyolefin foams, in particular expanded polypropylene (EPP) or expanded polyethylene (PEE) foams, or any other insulation made from compressed fibres.

6. The duct element (1) according to any one of claims 4 or 5, **characterized in that** the annular spacer systems (4) comprise:
- an inner spacer face (44), directed towards said closed section (5a) of annular space, and
- an outer spacer face (43), opposite to said inner spaced faced (44), directed outwards,
said outer spacer face (43) extending outwardly with respect to the end edges (24, 34) of said inner (2), outer (3) and potentially insert (7) tubes.

7. The duct element (1) according to any one of claims 1 to 6, **characterized in that** the thickness of said annular space (5), or of each of said annular spaces (5, 51, 52, 53), is between 5 and 25 mm, and preferably between 10 and 20 mm.

8. An air transport network, **characterized in that** it comprises a plurality of duct elements (1) according to any one of claims 1 to 7, assembled to each other by assembly means.

9. The air transport network according to claim 8, comprising a plurality of duct elements (1) according to claim 6, **characterized in that**:
- said assembly means comprise a clamping collar (8) arranged to assemble two ends of two duct elements (1) placed end-to-end,
- the outer spacer faces (43) of the annular spacer systems (4a3, 4a4, 4a5) of the two duct elements (1) to be assembled are in contact against each other,
- the ends of the two duct elements (1) to be assembled each comprise a moulding (35) on their outer surface (32),
- said clamping collar (8) comprises inwardly projecting locking flanges (83) along its two side edges, and
- said locking flanges (83) of said clamping collar (8) cooperate with said mouldings (35) of said two duct elements (1) to be assembled in such a way as to compress said outer spacer faces (43) against each other, when the clamping collar (8) is tightened, and to obtain continuity and tightness of the internal area suitable for transporting air.
